# EUROPEAN PATENT APPLICATION

(11) **EP 2 674 687 A2**
(43) Date of publication of application: **18.12.2013**
(21) Application number: 13171176.4
(22) Date of filing: 10.06.2013
(51) Int. Cl.: F24F 3/14, F24F 12/00

(54) **Ventilation equipment and heat recovery unit for ventilation equipment**

(30) Priority: 11.06.2012 FI 20125642
(71) Applicant: Swegon ILTO Oy, 20780 Kaarina (FI)
(72) Inventor: Jokinen, Mikko, 20780 Kaarina (FI)
(74) Representative: Kolster Oy Ab

(57) **Abstract**

The present invention relates to building engineering and heating, plumbing, ventilation and electrical engineering and ventilation technology, and particularly to ventilation systems as well as heat recovery units for ventilation equipment. The ventilation equipment (6) according to the invention, which comprises a heat recovery unit, an outside air fitting (8), a supply air fitting, an extract air fitting (7) and an exhaust air fitting, is characterized in that the ventilation equipment (6) comprises a condensation element (11) arranged in connection with the extract air fitting (7), the condensation element (11) being hollow on the inside and appropriately arranged in an extract air chamber provided in connection with the extract air fitting (7) such that an outside air flow is supplied into the condensation element (11) from an outside air chamber provided in connection with the outside air fitting (8). Owing to the solution according to the invention, the heat recovery unit for ventilation equipment does not collect humidity and does not freeze.

## Description

### Field of the invention

The invention relates to building engineering and heating, plumbing, ventilation and electrical engineering and ventilation technology, and particularly to ventilation systems as well as heat recovery units for ventilation equipment.

### Background of the invention

In building engineering, the importance of ventilation in residential buildings, office spaces and also in public spaces as well as in business spaces has become more and more emphasized in recent years. The aim is to achieve a healthy and pleasant indoor climate in a building through ventilation. Typically, ventilation e.g. in residential buildings is arranged such that outside air is brought into living spaces, such as bedrooms and living rooms, while air is removed from spaces where impurities mainly occur, such as the kitchen, WC, washroom and bathroom as well as walk-in-closet. The air thus flows from living spaces towards utility spaces.

Typically, ventilation in residential and office buildings is arranged by means of mechanical supply and extract air ventilation, in which case ventilation equipment is typically provided with a supply air filter and a heat recovery unit utilizing heat from extract air. As the standard for ventilation in residential buildings in particular and also the standard for energy efficiency in residential buildings are becoming higher, heat recovery units have become considerably more common.

Today, practically all new houses are installed with mechanical supply and extract air ventilation with heat recovery. The mechanical supply and extract air ventilation is used for removing air from the kitchen, washing spaces and walk-in-closets. The warm air to be removed passes through a heat recovery unit wherein heat energy is recovered therefrom as much as possible. The heat is transferred to air to be taken from outside and distributed mechanically to the living spaces and bedrooms. For the coldest times, the heat recovery unit may be provided e.g. with an electric resistance or a postheating battery.

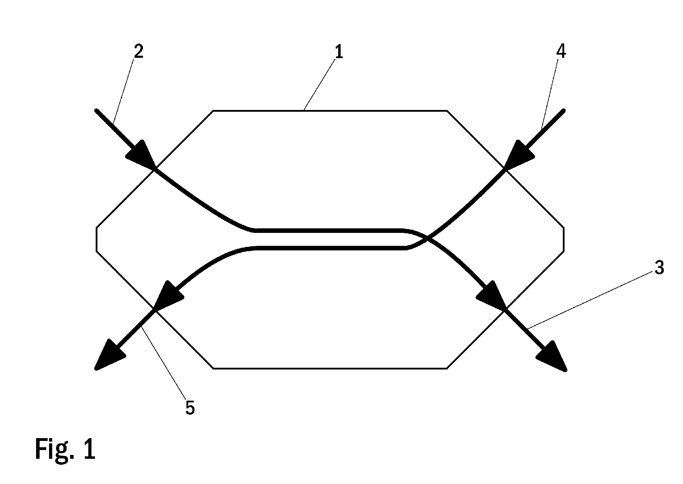

Prior art will be described in closer detail in the following with reference to the accompanying Figure 1, which is a side view showing a prior art heat recovery unit for ventilation equipment.

Figure 1 is a side view showing a prior art heat recovery unit for ventilation equipment. The prior art heat recovery unit 1 for ventilation equipment may comprise e.g. a plurality of aluminium sheets which form flow channels for air flows. Figure 1 shows a heat recovery unit 1 for ventilation equipment which operates on a counterflow principle and wherein air flows running in opposite directions flow in the flow channels of different sheets. When the air flows to and from the heat recovery unit 1 run in separate channels, odours are prevented from moving from one air flow to another.

In Figure 1, an outside air flow from an outside air channel to the heat recovery unit 1 is shown by arrow 2. Correspondingly, a supply air flow to be conveyed from the heat recovery unit 1 to an interior of a building is shown by arrow 3. Further, an extract air flow to be discharged out of the interior spaces and into to the heat recovery unit 1 is shown by arrow 4. Correspondingly, an exhaust air flow to be discharged from the heat recovery unit 1 is shown by arrow 5.

The prior art heat recovery unit for ventilation equipment is thus highly sensitive to humidity. Humidity in the extract air in particular causes condensation in the heat recovery unit, which increases considerably the risk of freezing and strains the heat recovery unit. For the prior art laminated sheet heat exchanger, a 35% relative humidity (RH, +21°C, RH 35%) of the extract air is the most detrimental. Then, the amount of internal energy of air is still at a low level and surfaces whose temperature is below +5°C condense in the heat exchanger.

During the worst minus degrees, the prior art heat recovery unit for ventilation equipment may collect humidity and frost in a part of the heat recovery unit, which strains the fans and shortens their service life. At its worst, the freezing of the heat recovery unit may cause the entire ventilation equipment to clog.

In the use of the prior art ventilation equipment, the freezing of the heat recovery unit causes overpressure and/or underpressure on the premises. The underpressure caused by the freezing of the heat recovery unit results in impairment of removal of humidity generated by ordinary life (laundering, cooking, showering, etc.). Further, the overpressure forces the generated humidity into the structures of the building, which in turn may cause mould or corresponding damages. The overpressure also impairs the quality of the indoor air and, at its worst, makes people fall ill. Correspondingly, the underpressure caused by the freezing of the heat recovery unit results in uncontrolled ventilation from between windows, corners, etc. Where such uncontrolled ventilation occurs, impurities find their way into the indoor air. Thus, the underpressure also impairs the quality of the indoor air and, at its worst, makes people fall ill.

Today, in building engineering and particularly in the ventilation systems of residential and office buildings as well as in heat recovery units for ventilation systems, a clear need and demand have thus emerged for novel solutions for enabling humidity from a heat recovery unit for ventilation equipment to be removed and problems caused by humidity to be overcome more advantageously and efficiently or damages caused by the problems to be minimized.

### Brief description of the invention

An object of the present invention is to provide a novel ventilation equipment solution and a heat recovery unit solution for ventilation equipment enabling problems caused by humidity to be overcome more advantageously and efficiently or damages caused by the problems to be minimized.

The ventilation equipment according to the invention, the ventilation equipment comprising a heat recovery unit, an outside air fitting, a supply air fitting, an extract air fitting and an exhaust air fitting, is **characterized in that** the ventilation equipment comprises a condensation element arranged in connection with the extract air fitting, the condensation element being hollow on the inside and appropriately arranged in an extract air chamber provided in connection with the extract air fitting such that an outside air flow is supplied into the condensation element from an outside air chamber provided in connection with the outside air fitting.

Preferably, the ventilation equipment comprises a supply air fan and/or an extract air fan. Preferably, the condensation element is appropriately arranged between the extract air fitting and the extract air fan.

Preferably, the condensation element is arranged such that the outside air flow is forwarded from inside the condensation element to the supply air fan.

Preferably, the condensation element is implemented by means of a sheet structure, corrugated sheet structure, accordion-folded sheet structure, honeycomb structure or another suitable structure. Further, preferably, the structure of the condensation element is made of a suitably heat conductive material, such as metal, metal alloy or composite material. Alternatively, the structure of the condensation element is made of aluminium or aluminium alloy, for instance. Preferably, the condensation element is arranged in connection with the heat recovery unit.

The heat recovery unit for ventilation equipment according to the invention is **characterized in that** the heat recovery unit comprises a condensation element arranged in connection with an extract air fitting, the condensation element being hollow on the inside and appropriately arranged in an extract air chamber provided in connection with the extract air fitting such that an outside air flow is supplied into the condensation element from an outside air chamber provided in connection with an outside air fitting.

Preferably, the condensation element is arranged such that the outside air flow is forwarded from inside the condensation element to a supply air fan.

Preferably, the condensation element is implemented by means of a sheet structure, corrugated sheet structure, accordion-folded sheet structure, honeycomb structure or another suitable structure.

Preferably, the structure of the condensation element or the sheet structure is made from a suitably heat conductive material, such as metal, metal alloy or composite material. Preferably, the structure of the condensation element is made of aluminium or aluminium alloy, for instance.

An improved solution is now provided for heat recovery to be used in ventilation equipment, which heat recovery unit solution may be applied to many different ventilation systems and equipment.

The present invention provides several advantages, which will be better understood from reading the detailed description. Owing to the solution according to the invention, the heat recovery unit for ventilation equipment does not collect humidity and does not freeze. The solution according to the invention enables problems caused by excessive humidity and possible freezing in the heat recovery unit to be overcome more advantageously and efficiently or damages caused by the problems to be minimized.

### Brief description of the figures

Figure 1 is a side view showing a prior art heat recovery unit for ventilation equipment, and
Figure 2 is an end view showing ventilation equipment according to the invention.

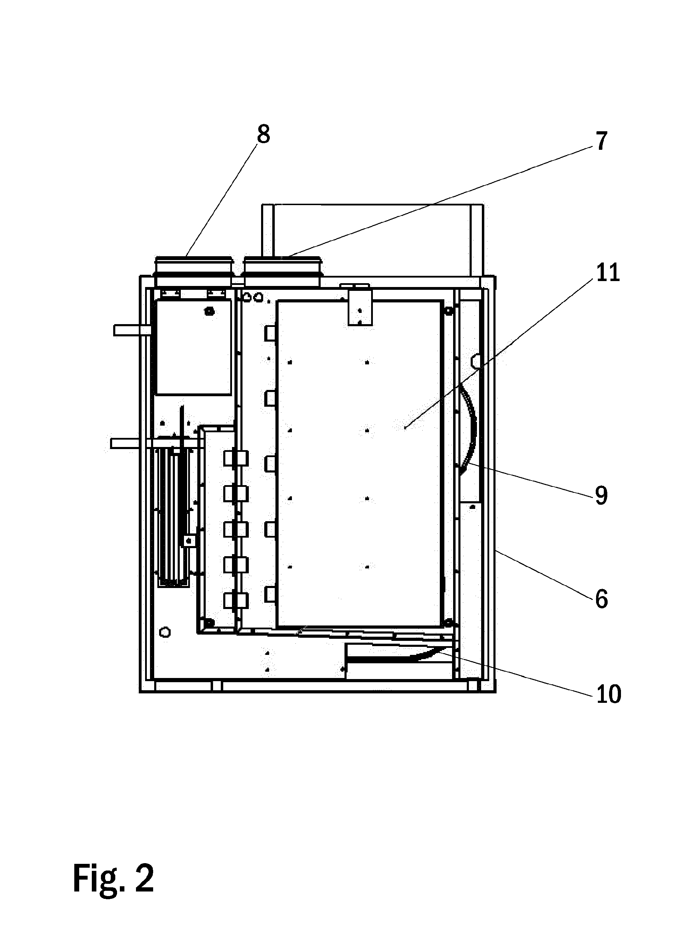

Figure 1 has been presented above. Some embodiments of the invention are now described in closer detail in connection with some preferred embodiments and with reference to Figure 2.

### Detailed description of an embodiment of the invention

Figure 2 is an end view showing ventilation equipment according to the invention. The ventilation equipment 6 according to the invention comprises a heat recovery unit as well as an outside air fitting 8 for an outside air channel connection, a supply air fitting for a supply air channel connection, an extract air fitting 7 for an extract air channel connection, and an exhaust air fitting for an exhaust air channel connection. The ventilation equipment 6 according to the invention may also further comprise a supply air fan 10 and/or an extract air fan 9.

The ventilation equipment 6 according to the invention also comprises a condensation element 11 arranged in connection with the extract air fitting 7. In the solution according to the invention, the condensation element 11 is responsible for removing humidity from extract air through condensation. The operation of the condensation element according to the invention is based on cooling surfaces, whereby the surfaces start to condense and the relative humidity RH of the extract air decreases.

The condensation element 11 according to the invention may also be hollow on the inside and appropriately arranged in an extract air chamber provided in connection with the extract air fitting 7 such that an outside air flow is supplied into the condensation element 11 from an outside air chamber provided in connection with the outside air fitting 8. Thus, the condensation element 11 according to the invention derives cooling energy from the outside air flow. Correspondingly, from inside the condensation element 11 the outside air flow may be forwarded to a supply air fan 10.

The condensation element 11 according to the invention may be dimensioned to be active e.g. when the relative humidity RH of the extract air is 25 to 45% (+21°C, RH 25 to 45%). The condensation element 11 according to the invention enables the relative humidity RH of the extract air to be reduced to a level of 20% (+21 °C, RH 20%, condensation point -2.5°C).

By means of the condensation element 11 according to the invention, the extract air flow having a lower relative humidity prevents the heat recovery unit from freezing and, consequently, substantially increases the efficiency of the heat recovery unit of the ventilation equipment 6.

The condensation element 11 for ventilation equipment according to the invention may be implemented e.g. by means of a sheet structure, corrugated sheet structure, accordion-folded sheet structure, honeycomb structure or another suitable structure. The structure formed by the condensation element 11 according to the invention may be made of a suitably heat conductive material, such as metal, metal alloy or composite material. The structure formed by the condensation element 11 according to the invention may be made of aluminium or aluminium alloy, for instance. The condensation element 11 for ventilation equipment according to the invention may also be arranged in connection with a heat recovery unit.

The solution according to the invention enables the problems caused by excessive humidity to be brought under control in the use of the heat recovery unit for ventilation equipment. This saves the fans and power they require. Owing to the solution according to the invention, the heat recovery unit for ventilation equipment operates at its optimum efficiency.

The solution according to the invention enables the service life of the fans to be increased because of the lower load. Owing to the solution according to the invention, the heat recovery unit for ventilation equipment does not collect humidity and does not freeze. The solution according to the invention enables the problems caused by excessive humidity and possible freezing in the heat recovery unit to be overcome more advantageously and efficiently or damages caused by the problems to be minimized.

It will be apparent to a person skilled in the art that as technology advances, the basic idea of the invention may be implemented in many different ways. The invention and its embodiments are thus not restricted to the examples described above but may vary within the scope of the claims. Thus, different features may be left out, modified or replaced by equivalents, and features described in this patent application may be combined to form various combinations.

## Claims

1. Ventilation equipment (6), the ventilation equipment (6) comprising a heat recovery unit, an outside air fitting (8), a supply air fitting, an extract air fitting (7) and an exhaust air fitting, **characterized in that** the ventilation equipment (6) comprises a condensation element (11) arranged in connection with the extract air fitting (7), the condensation element (11) being hollow on the inside and appropriately arranged in an extract air chamber provided in connection with the extract air fitting (7) such that an outside air flow is supplied into the condensation element (11) from an outside air chamber provided in connection with the outside air fitting (8).

2. The ventilation equipment as claimed in claim 1, **characterized in that** the ventilation equipment (6) comprises a supply air fan (10) and/or an extract air fan (9).

3. The ventilation equipment as claimed in claim 2, **characterized in that** the condensation element (11) is appropriately arranged between the extract air fitting (7) and the extract air fan (9).

4. The ventilation equipment as claimed in claim 2 or 3, c**haracterized in that** the condensation element (11) is arranged such that the outside air flow is forwarded from inside the condensation element (11) to the supply air fan (10).

5. The ventilation equipment as claimed in any one of the preceding claims 1 to 4, **characterized in that** the condensation element (11) is implemented by means of a sheet structure, corrugated sheet structure, accordion-folded sheet structure, honeycomb structure or another suitable structure.

6. The ventilation equipment as claimed in claim 5, **characterized in that** the structure of the condensation element (11) is made of a suitably heat conductive material, such as metal, metal alloy or composite material.

7. The ventilation equipment as claimed in claim 5, **characterized in that** the structure of the condensation element (11) is made of aluminium or aluminium alloy, for instance.

8. The ventilation equipment as claimed in any one of the preceding claims 1 to 7, **characterized in that** the condensation element (11) is arranged in connection with the heat recovery unit.

9. A heat recovery unit for ventilation equipment, **characterized in that** the heat recovery unit comprises a condensation element (11) arranged in connection with an extract air fitting (7), the condensation element (11) being hollow on the inside and appropriately arranged in an extract air chamber provided in connection with the extract air fitting (7) such that an outside air flow is supplied into the condensation element (11) from an outside air chamber provided in connection with an outside air fitting (8).

10. The heat recovery unit as claimed in claim 9, **characterized in that** the condensation element (11) is arranged such that the outside air flow is forwarded from inside the condensation element (11) to a supply air fan (10).

11. The heat recovery unit as claimed in claim 9 or 10, **characterized in that** the condensation element (11) is implemented by means of a sheet structure, corrugated sheet structure, accordion-folded sheet structure, honeycomb structure or another suitable structure.

12. The heat recovery unit as claimed in any one of claims 9 to 11, **characterized in that** the structure of the condensation element (11) or the sheet structure is made of a suitably heat conductive material, such as metal, metal alloy or composite material.

13. The heat recovery unit as claimed in any one of the preceding claims 9 to 12, **characterized in that** the structure of the condensation element (11) is made of aluminium or aluminium alloy, for instance.
